# DEMANDE DE BREVET EUROPEEN

(11) **EP 3 964 906 A2**
(43) Date de publication de la demande: **09.03.2022**
(21) Numéro de dépôt: 21194592.8
(22) Date de dépôt: 02.09.2021
(51) Int. Cl.: G05B 19/418

(54) **UNITÉ DE CONTRÔLE POLYVALENTE ET DÉPLAÇABLE**

(30) Priorité: 02.09.2020 FR 2008885
(71) Demandeur: Alysee Services, 62118 Biache-Saint-Vaast (FR)
(72) Inventeur: RICHARD, Michel, 62118 Biache-saint-vaast (FR)
(74) Mandataire: Fidal Innovation

(57) **Abrégé**

L'unité de contrôle déplaçable pour pièces fabriquées en série, comprend :
- Une interface Homme-Machine pour échanger de l'information entre l'unité de contrôle et un opérateur et donner des instructions à l'unité de de contrôle ;
- un système de comparaison qui peut être configuré à travers l'interface Homme-machine, et qui comprend au moins un moyen de mesure avec une mémoire dans laquelle est enregistrée au moins une mesure ;
- une ouverture d'accès à un espace de réception d'une pièce à contrôler;
- au moins un posage de pièce (60) pour positionner correctement la pièce à contrôler.

## Description

### DOMAINE DE L'INVENTION

La présente invention se rapporte au contrôle qualité de pièces manufacturées, notamment à un contrôle dimensionnel et des défauts desdites pièces manufacturées.

### ARRIERE-PLAN TECHNOLOGIQUE

Plus précisément, l'invention se rapporte à une unité de contrôle pour réaliser une fonction de type « mur de contrôle ».

Dans le domaine de la production à la chaine de certaines pièces manufacturées, par exemple dans le domaine aéronautique ou automobile, il existe un besoin de calibrer ou contrôler la production à certains intervalles de temps et à certaines étapes clés, pas tout au long de la production, ni pour chaque pièce produite. En effet, la production, une fois bien réglée, est suffisamment stable pendant une durée de temps établie selon l'expérience pour ne pas nécessiter un contrôle de chaque pièce produite. Le contrôle qualité est donc notamment effectué en intervenant lorsqu'un problème qualité répété apparait à certaines étapes clés.

Il s'agit en général de confier une mission de « mur de contrôle » à un opérateur muni d'un cahier des charges répertoriant des points de contrôle à vérifier. Les points de contrôle peuvent être de nature variée mais sont tous de nature optique. Ainsi un opérateur muni d'outils de mesure visuels peut accomplir cette mission.

En revanche, lorsqu'un contrôle de ce type est déployé pendant une durée définie, de quelques heures à quelques jours, le contrôle effectué est exhaustif : chaque pièce produite est contrôlée systématiquement et soumise à la validation d'un opérateur.

Actuellement, des murs de contrôle sont déployés à différentes étapes clés du contrôle qualité de pièces manufacturées en fonction des problèmes de qualité constatés.

Ces murs de contrôle peuvent être réalisés par un opérateur outillé qui aura reçu les instructions concernant les caractéristiques à vérifier, et qui devra se concentrer afin de suivre un protocole de vérification appelé chemin de contrôle. L'inconvénient de ce mode de réalisation est un temps nécessaire par contrôle qui peut être assez long en fonction de l'opérateur, et qui prend un temps incompressible. En effet, le chemin de contrôle suppose une série de manipulations, de prises de mesure, et de prises de note chronophages. De plus, elle est tributaire de la performance de l'opérateur.

Il est donc connu des systèmes de contrôle qualité dédiés à une étape de production et fixe, intégrés à la chaine de production et actifs en permanence lors de la production à la chaine.

Néanmoins, il n'est pas connu de l'état de la technique de dispositif permettant d'assister efficacement un opérateur dans sa mission de « mur de contrôle ».

Le document WO 2017/136815 A1 est un exemple dans lequel un système de tri de pièces est utilisé pour trier, inspecter et séparer les pièces de faible taille produites en très grande série, comme des attaches, des boulons, des tiges filetées, etc.

En particulier, le système de tri analyse des pièces usinées pour déterminer si elles répondent à des critères de conformité préétablies. L'automatisation du contrôle de pièces produites en grande série de taille standard permet une production homogène, et la correction rapide d'éventuels problèmes apparus en cours de production.

Toutefois, le système de tri est intégré à la chaine de production, fixe et spécialisé dans le contrôle de l'ensemble du flux d'un type de pièce et d'une étape de fabrication.

Chaque pièce analysée n'est pas soumise à la validation par un opérateur dans les systèmes de tri automatique connus, contrairement à ce qui est effectué dans le cadre d'un « mur de contrôle » effectué par un opérateur.

Faire intervenir un opérateur outillé et habilité pour effectuer un « mur de contrôle » bloque les expéditions pour la durée du contrôle et offre un contrôle où l'erreur humaine est possible.

L'invention vise ainsi à fournir un moyen de contrôle qualité qui, pour assister l'opérateur dans sa mission de « mur de contrôle », nécessite moins de ressources, qui offre un grand niveau d'automatisation, de précision, de rapidité et de qualité dans le contrôle et qui peut être utilisé sur différentes lignes de production, à différentes étapes, voire chez des destinataires des pièces en se configurant très rapidement à chaque point à contrôler.

Ainsi, l'opérateur est assisté dans sa mission de « mur de contrôle » par un dispositif reconfigurable, compact et autonome afin d'être déplaçable aux différentes étapes de lignes de production, dans des entrepôts, et/ou chez des destinataires des pièces, par exemple un constructeur automobile.

### RÉSUMÉ DE L'INVENTION

Le principe de l'invention est de réaliser un dispositif reconfigurable en fonction de l'étape de production des différentes pièces à produire, compact et autonome pour être déplaçable dans une usine de production de pièces manufacturées. Ainsi, il est possible d'accélérer et d'améliorer la qualité du contrôle effectuée par l'opérateur.

Ainsi, l'invention se rapporte à une unité de contrôle déplaçable pour assister un opérateur dans le contrôle de pièces fabriquées, comprenant :
- au moins une source d'énergie intégrée et/ou une interface apte à se brancher à une source d'énergie externe ;
- Une interface Homme-Machine permettant d'échanger de l'information entre l'unité de contrôle et un opérateur et de donner des instructions à l'unité de de contrôle ;

- une ouverture d'accès à un espace de réception d'une desdites pièces à contrôler dans une position permettant au moins une analyse de ladite pièce manufacturée, et un obturateur escamotable de l'ouverture d'accès;
- au moins un posage de pièce (60) permettant à un opérateur de positionner correctement la pièce à contrôler,
caractérisé en ce que ladite unité de contrôle déplaçable comprend :
- un système de comparaison configurable à travers l'interface Homme-Machine comprenant au moins un moyen de mesure comprenant une mémoire dans laquelle est enregistrée au moins une mesure, comprenant une visualisation du résultat dudit système de comparaison à travers l'interface Homme-machine et comprenant une fonction permettant à l'opérateur de valider ou d'infirmer le résultat dudit système de comparaison. Les pièces à contrôler sont des pièces manufacturées ou un assemblage de pièces manufacturées qui ont reçu au moins l'une des opérations d'usinage suivantes : emboutissage, perçage, soudure, assemblage, etc.

La source d'énergie intégrée est en général électrique, sous la forme d'une batterie. La source d'énergie externe peut être une source d'alimentation électrique externe monophasée.

L'interface Homme-Machine comprend un écran et des boutons. Les boutons peuvent être organisés en clavier.

Le posage de pièce est configuré pour être adapté au tiroir et à la position d'éventuels miroirs compris dans le système de comparaison configurable pour pouvoir maintenir la pièce à contrôler dans une position permettant une mesure rapide, précise et fiable, sans avoir à manipuler les pièces plusieurs fois.

Le système de comparaison peut comprendre un ordinateur et/ou un circuit électronique dédié à la comparaison de pièces manufacturées.

Grâce à ces dispositions, l'opérateur est assisté dans sa mission de « mur de contrôle ». Chaque contrôle peut être effectué plus rapidement, avec plus de précision, et avec une traçabilité précise. En effet, le contrôle peut être archivé sous la forme de photos visionnables à l'écran avec le statut de chaque point de contrôle tel que proposé selon l'unité de contrôle déplaçable. L'opérateur peut modifier le résultat. Un test donnant un résultat hors limites peut être défini comme acceptable. Inversement, un test donnant un résultat dans les limites peut être défini comme inacceptable par l'opérateur.

A partir d'un certain nombre de corrections effectuées sur un même test pour corriger une limite, les limites d'une valeur acceptées peuvent être redéfinies automatiquement soit en y intégrant des valeurs initialement exclues, soit en excluant des valeurs initialement admises.

La taille maximale des pièces manufacturées à contrôler est idéalement 400 mm x 500 mm × 2000 mm. Des pièces de plus grande tailles peuvent être contrôlées, sous réserve de manipulations supplémentaires de la part de l'opérateur et au cas par cas.

Selon différents aspects, il est possible de prévoir l'une et/ou l'autre des dispositions ci-dessous.

Selon une réalisation, la mémoire comprend au moins un modèle numérique 3D d'au moins une pièce étalon.

« 3D » est une abréviation pour trois dimensions.

Ainsi on peut programmer n'importe quel chemin de contrôle en intégrant autant de mesures que nécessaires.

Selon une réalisation, le modèle numérique 3D enregistré est obtenu à partir de l'analyse d'une pièce étalon préalablement effectuée par ladite unité de contrôle.

Un profilomètre 3D est un moyen de mesure utilisant une ligne laser émise sur le produit, puis récupérée par un capteur optique. Ainsi, le profil est reconstitué avec une grande précision.

Par grande précision, au sens de l'invention, on entend une résolution qui atteint au moins les valeurs ci-dessous :
Résolution X (Largeur) : 0.4125 mm
Résolution Y (Longueur) : 0.2 mm
Résolution Z (Hauteur) : 0.1275 mm

En revanche, cette technique impose d'intégrer un déplacement relatif du faisceau optique et de la pièce à contrôler, afin de pouvoir mesurer entièrement la pièce à contrôler.

La stéréovision est basée sur deux caméras et prend comme exemple la vision humaine. Les deux caméras, positionnées à une distance connue entre elles, sont capable de restituer l'image 3D de l'objet.

Ainsi, on peut mesurer une pièce à contrôler de taille maximale 400 mm × 400 mm × 300 mm en 2 ou 3 secondes sans avoir à déplacer la pièce à contrôler. Au-delà, la pièce à contrôler devra être déplacée par un moyen de déplacement, soit automatique, soit manuel. Le déplacement manuel prend en moyenne 3 secondes. Par exemple, le cycle de contrôle d'une pièce de 1,6 m de long nécessite 5 déplacements et 4 mesures et prend en moyenne 30 secondes.

La résolution est presque aussi précise qu'avec une profilométrie 3D :
Résolution X (largeur) : 0.583 mm
Résolution Y (sens d'avancée) : 0.583 mm
Résolution Z (hauteur) : 0.445 mm

Ainsi, on peut rapidement contrôler des pièces sans aucune préparation préalable, avec un gain de temps significatif en l'absence d'un relevé des mesures à contrôler.

Selon une réalisation, l'unité de contrôle comprend au moins trois roulettes aptes à supporter le poids de ladite unité de contrôle et fixées dans une position permettant d'assurer une interface entre le sol et ladite unité de contrôle.

Ainsi, le déplacement de l'unité de contrôle sur le sol nécessite moins d'effort.

Selon une réalisation, l'espace de réception peut être ouvert par deux ouvertures situées sur deux faces opposées de ladite unité de contrôle.

Ainsi, on peut installer deux opérateurs de chaque côté de l'unité de contrôle afin d'accélérer la mise ne place et le retrait des pièces à contrôler.

Selon une réalisation, l'ouverture d'accès est munie d'un tiroir adapté, en position ouverte, pour recevoir la pièce à contrôler, pour être déplacé en position fermée dans laquelle le tiroir forme ledit obturateur.

Selon une réalisation, le système de comparaison analyse la fréquence des différences entre la comparaison initiale et la validation de l'opérateur en fonction d'un seuil de nombre de différence établi et, lorsque ce seuil est atteint, le système de contrôle met à jour la valeur servant à la comparaison initiale en intégrant les valeurs admises par l'opérateur et en excluant les valeurs rejetées par l'opérateur.

Ainsi, le système de comparaison est mis en jour en temps réel et tient compte non seulement du cahier des charges initial, mais également des décisions de l'opérateur en temps réel.

Selon un autre aspect, l'invention se rapporte à un procédé de réalisation d'un mur de contrôle comprenant les étapes suivantes :
- on positionne une unité de contrôle sur un emplacement d'une étape à contrôler d'une chaine de production ;
- on active l'unité de contrôle ;
- on sélectionne un modèle de référence préalablement enregistré dans le système de comparaison via l'interface homme-machine et on positionne le posage de pièce adapté audit modèle ;
- on pose sur le posage de pièce une pièce à contrôler ;
- on lance un cycle du système de mesure ;
- le résultat de la comparaison s'affiche sur un écran de l'unité de contrôle déplaçable;
- optionnellement, on déplace la pièce à contrôler et on relance un cycle du système de mesure autant de fois que nécessaire pour mesurer toute la pièce à contrôler ;
- on récupère la pièce contrôlée et le résultat du système de comparaison entre une mesure de la pièce à contrôler et une mesure correspondante du modèle de référence ;
- on répète le cycle de mesure pour chacune des mesures à vérifier programmé dans le système de comparaison ;
- on répète les étapes ci-dessus à partir de la quatrième étape en changeant de pièce à contrôler tant que le nombre requis de pièces à contrôler ou le délai minimum requis pour la mise en place du mur de contrôle n'est pas atteint ;
- on récupère le posage de pièce, on désactive l'unité de contrôle, et on retire ladite unité de contrôle dudit emplacement de ladite étape à contrôler.

Selon une réalisation, l'affichage du résultat sur l'écran se fait sous la forme d'indices de couleur positionnées sur l'image de la pièce à contrôler au niveau des points de contrôle de la pièce à contrôler, la couleur de l'indice indiquant le résultat de la comparaison correspondante.

Selon une réalisation, après avoir activé l'unité de contrôle, on mesure une pièce étalon et on mémorise ladite mesure.

Selon une réalisation, un seul opérateur effectue l'ensemble des opérations.

Selon une réalisation, deux opérateurs effectuent l'ensemble des opérations en prenant position chacun au niveau d'un des côtés opposés de ladite unité de contrôle doté d'une ouverture.

### BREVE DESCRIPTION DES DESSINS

Des modes de réalisation de l'invention seront décrits ci-dessous par référence aux dessins, décrits brièvement ci-dessous :
[Fig. 1] représente une unité de contrôle pour pièces manufacturées en série vue en perspective avec un opérateur qui se tient prêt à positionner une pièce manufacturée à contrôler. Le tiroir est en position ouverte.
[Fig. 2] représente une unité de contrôle pour pièces manufacturées en série vue en perspective avec un opérateur qui se tient prêt à positionner une pièce manufacturée à contrôler. Le tiroir est en position fermée.
[Fig. 3] illustre le principe d'une profilométrie 3D en trois dimensions de façon schématique.
[Fig. 4] illustre le principe d'une stéréovision représentée en trois dimensions de façon schématique. Sur les dessins, des références identiques désignent des objets identiques ou similaires.

### DESCRIPTION DETAILLEE

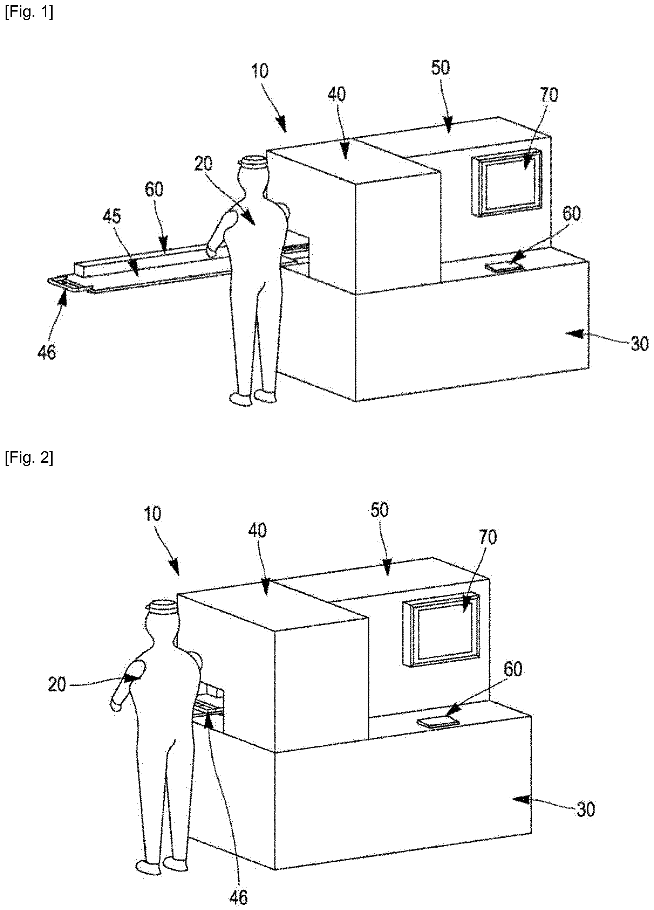

La figure 1 est une vue en trois dimensions d'une unité de contrôle **10** depuis un point situé dans le dos d'un opérateur **20** en action sur ladite unité de contrôle **10**.

L'unité de contrôle est formée par trois pavés assemblés **30**, **40**, **50**. Le premier pavé **30** a une hauteur dont l'ordre de grandeur est environ un mètre, la largeur est également environ un mètre, la profondeur est suffisamment longue pour accueillir entièrement un tiroir d'au moins 2 mètres de long. Ledit premier pavé **30** comprend une unité d'ordinateur et un système de roulette déployable.

Par « environ un mètre », on entend un mètre plus ou moins 30 cm.

Le deuxième pavé **40** a la même largeur que le premier pavé. Il est plus court que le premier pavé. Il est aligné avec une face latérale du premier pavé **30** et est fixé sur la face supérieure dudit premier pavé **30**. Ledit deuxième pavé **40** comprend deux orifices sur deux faces opposées adaptés pour laisser passer un tiroir **45**, un posage de pièce **60** et une pièce à contrôler dans une position adaptée au contrôle. La hauteur du deuxième pavé **40** est d'environ un mètre.

Le troisième pavé **50** est moins large que les deux précédents pavés **30**, **40**. Il est posé sur le premier pavé, sa hauteur est la même que celle du deuxième pavé. La largeur du troisième pavé **50** est moins importante que les deux précédents pavés **30**, **40** pour pouvoir dégager une surface plane sur la face supérieure du premier pavé **30** permettant d'y placer un clavier d'ordinateur **60** et éventuellement d'autres boutons nécessaires pour commander l'unité de contrôle **10**.

Deux faces latérales du troisième pavé **50** sont alignées avec les faces du premier pavé 30, une troisième face latérale est en contact avec une face du deuxième pavé **40**, et une quatrième face latérale, celle qui est perpendiculaire à la surface plane du premier pavé **30** où un clavier d'ordinateur **60** est positionné, supporte un écran **70**.

L'écran **70** et le clavier **60** sont reliés à un ordinateur qui se situe à l'intérieur du premier pavé **30**. Cet ordinateur gère également un profilomètre 3D situé dans le deuxième pavé **40**.

Le tiroir **45** coulisse le long de rails jusqu'à une position complètement ouverte représentée sur la figure 1. Une poignée de préhension **46** est fixée à chacun des bords latéraux du tiroir **45**. En position ouverte, une pièce à contrôler peut être disposée sur le tiroir, qui peut ensuite être déplacé pour déplacer la pièce vers l'espace de réception. En position fermée, le tiroir obture l'ouverture d'accès à cet espace de réception.

Le système qui vient d'être décrit peut être utilisé comme suit. L'opérateur **20** positionne l'unité de contrôle **10** au niveau d'un emplacement de la chaine de production à contrôler, puis active l'unité de contrôle **10**, notamment en l'alimentant en électricité.

L'opérateur effectue alors une phase de configuration dépendante du contrôle à effectuer et de la pièce à fabriquer. Soit une pièce étalon de la pièce à fabriquer est mesurée par l'unité de contrôle 10 selon la même procédure que celle d'un contrôle de pièce décrit ci-dessous, soit les mesures sont passées à l'unité de contrôle sous la forme de fichiers informatiques mis en mémoire dans l'ordinateur de l'unité de contrôle 10.

Une fois le modèle complet disponible sous une forme numérique, l'opérateur peut enregistrer dans l'ordinateur de l'unité de contrôle 10 les mesures et les positionnements des éléments d'assemblage (soudures et/ou poinçons).

Ensuite, l'opérateur **20** effectue l'ouverture du tiroir **50**. L'ouverture peut être manuelle en actionnant la poignée **46**, ou automatique. Une fois le tiroir **50** ouvert, l'opérateur **20** peut y positionner le posage de pièce **60**, puis une pièce à contrôler **100** en position de contrôle.

Une fois ces opérations effectuées, l'opérateur 20 se positionne au niveau du clavier et de l'écran, et lance un cycle de mesure. Le tiroir 45 passe alors en position fermée comme illustrée sur la figure 2 permettant de définir une chambre noire opaque, indépendamment de la lumière ambiante, ce qui permet de contrôler l'éclairage à l'intérieur, et le profilomètre 3D effectue l'analyse de la pièce.

D'autres systèmes d'analysepeuvent être mis en œuvre pour finir d'analyser la pièce, notamment au niveau des soudures et poinçons à l'aide de caméras optiques spécifiques, de scanners optiques, etc.

Le processeur de l'ordinateur permet de comparer les mesures de la pièce à des mesures enregistrées dans la mémoire de l'ordinateur.

Parmi les mesures possibles, on peut citer : longueur, surface, diamètre, forme, présence d'écrous, etc. Le cas des poinçons peut être contrôlé en comparant avec un poinçon étalon sur par exemple des critères de netteté et de positionnement. Les soudures peuvent être également inspectées à l'aire de système de contrôle permettant d'analyser la qualité de la structure de la soudure.

Un affichage à l'écran peut superposer l'image de la pièce à contrôler avec les points à contrôler symbolisés par des repères superposés à l'image de la pièce à l'endroit correspondant au point contrôlé. Pour chaque point de contrôle, un code de couleur peut indiquer rapidement à l'opérateur si le critère déjà défini dans l'unité de contrôle déplaçable est satisfait ou non. Une couleur verte associée à un repère sur un point de contrôle indique que le critère est satisfait. Au contraire, une couleur rouge peut indiquer que le critère n'est pas satisfait. Entre ces deux couleurs, on peut envisager toute une gamme de couleurs dégradées allant du vert au rouge en passant par l'orange. L'opérateur peut corriger en fonction de son appréciation personnelle.

Selon un mode de réalisation, l'unité de contrôle comprend un logiciel d'apprentissage sur le mode de l'intelligence artificielle qui adapte en continu et en temps réel les critères en fonction des corrections imposées par l'opérateur. Ainsi, on peut définir des seuils de nombres de répétition de valeurs sur un critère donné initialement hors des limites et corrigées par l'opérateur comme acceptable au-delà duquel les valeurs initialement détectées comme en dehors des limites par les mesures limites telles qu'enregistrées initialement dans la mémoire de l'ordinateur rentrent dans la marge acceptable.

Inversement, une valeur initialement détectée comme acceptable peut devenir, après un certain nombre seuil de refus par l'opérateur, comme une donnée non acceptable.

Ainsi, les critères peuvent évoluer en permanence en fonction des corrections imposées par l'opérateur.

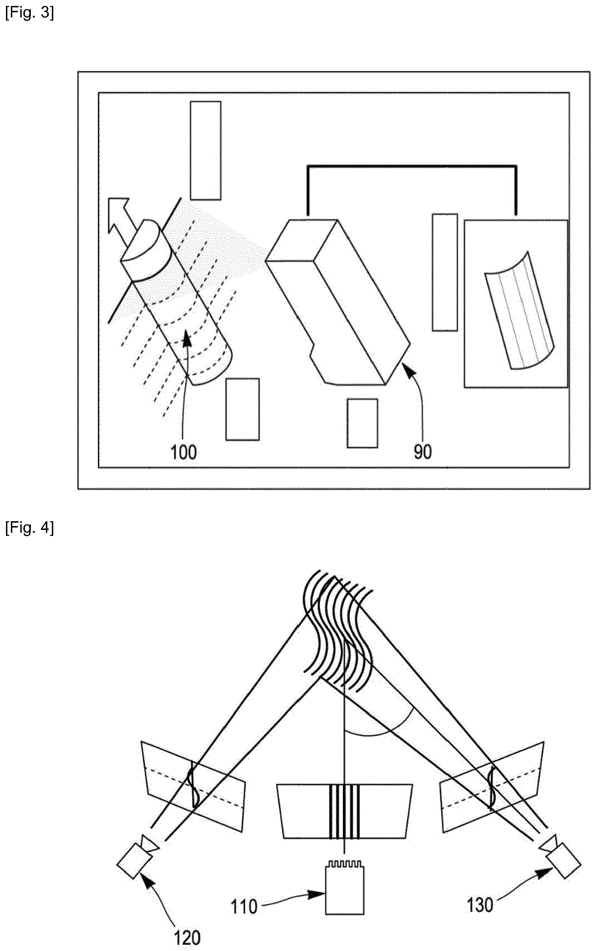

Un mode de réalisation de l'instrument de mesure et la méthode de mesure correspondante est illustrée figure 3 : la profilométrie 3D. Un boitier **90** est équipé d'un émetteur de ligne laser et d'un capteur sensible à la lumière laser. En déplaçant la pièce à contrôler **100**, le système génère une représentation 3D entièrement représentative de la pièce à contrôler **100** sous la forme de données digitales enregistrables dans une mémoire informatique.

A la place de la profilométrie 3D représentée figure 3, une autre méthode de mesure peut être mise en place : la stéréovision illustrée figure 4. La stéréovision nécessite un peu plus d'équipements, de volume d'installation que la profilométrie 3D, mais permet des mesures plus rapides et presque aussi précises qu'avec le profilomètre 3D de la figure 3.

Un projecteur **110** projette une projection d'un motif laser, appelée lumière structurée, par exemple de rayures droites parallèles rapprochées, sur une face de la pièce à contrôler. De chaque côté de ce projecteur **110**, une caméra **120**, **130** est positionnée à une position fixe connue et avec un angle d'orientation connu récupère une image qui est analysée par un programme d'ordinateur qui extrait des mesures à partir de l'image de la projection de chaque ligne sur l'objet. Ces mesures sont enregistrées de façon digitale. Les deux relevés des deux caméras **120**, **130** sont croisés par un programme de l'ordinateur afin de reconstituer un modèle digital complet en trois dimensions de la pièce à contrôler **100**.

Une fois la pièce à contrôler **100** ainsi entièrement mesurée, certaines mesures clés relevées sont comparées à des mesures préalablement enregistrées par un programme de l'ordinateur.

Les mesures préalablement enregistrées peuvent provenir soit du cahier des charges de la pièce à contrôler **100**, soit d'une mesure d'une pièce étalon effectuée à l'aide de la même unité de contrôle **10** ou d'un autre appareil de mesure.

Une fois toutes les mesures possibles selon un positionnement de la pièce sont réalisées, le cycle de mesure est terminé et le tiroir **45** est déverrouillé. S'il est automatisé, un actionneur va automatiquement extraire le tiroir **45** en position d'ouverture. Sinon, c'est l'opérateur **20** qui tire le tiroir **45** manuellement à l'aide de la poignée de préhension **46** jusqu'à sa position d'ouverture.

Si un seul positionnement ne suffit pas à relever toutes les mesures nécessaires, plusieurs cycles de mesure d'une même pièce à contrôle **100** à une même étape de contrôle peuvent ainsi réalisées.

L'opérateur **20** peut alors repositionner la pièce à contrôler **100** afin de permettre le contrôle d'une ou plusieurs zones masquées lors du précédent cycle de mesure à l'aide d'un nouveau cycle de mesure effectué sur la pièce à contrôler **100** repositionnée.

Les résultats de la comparaison s'affichent alors sur l'écran **70**, l'opérateur peut choisir de les enregistrer, et peut en prendre connaissance. Des marges d'acceptation des mesures peuvent être enregistrées dans la mémoire de l'ordinateur et utilisées par un programme de l'ordinateur pour indiquer directement à l'écran **70**, par exemple par un code couleur, les mesures qui seraient en dehors des limites autorisées. Un signal sonore peut également attirer l'attention de l'opérateur **20** à partir d'au moins une mesure hors limite.

L'opérateur garde la possibilité, selon son appréciation, de corriger le résultat du contrôle selon son appréciation subjective. La traçabilité de ces corrections peut être assurée par l'unité de contrôle déplaçable via l'enregistrement de chaque correction effectuée par l'opérateur dans une base de données destinée à être conservée.

L'ordinateur de l'unité de contrôle déplaçable peut également effectuer une fonction de surveillance sur ces valeurs afin de détecter une correction devenue très fréquente ou systématique. Dans le cas d'une très haute fréquence de correction sur l'acceptabilité d'un critère, au-delà d'un seuil défini, le programme d'ordinateur peut aller modifier les mesures préalablement enregistrées par un programme de l'ordinateur. Ainsi des mesures préalablement enregistrées acceptables, peuvent devenir inacceptables, et inversement.

Une fois tous les résultats obtenus et analysés, l'opérateur **20** envoie une commande de restitution de la pièce à contrôler **100**. Le tiroir **45** est alors déverrouillé. S'il est automatisé, un actionneur va automatiquement extraire le tiroir en position d'ouverture. Sinon, c'est l'opérateur **20** qui tire le tiroir **45** manuellement à l'aide de la poignée de préhension **46** jusqu'à sa position d'ouverture.

Une fois le tiroir **45** ouvert, la pièce contrôlée **100** peut être retirée par l'opérateur **20**. Le cycle de contrôle est alors terminé. Une nouvelle pièce à contrôler du même type peut être alors positionnée. Le cycle de contrôle peut alors être répété. Une fois que l'ensemble du nombre de pièces à contrôler 100 d'un même type a été contrôlé ou que la durée du contrôle a été atteinte, le mur de contrôle de ces pièces est alors terminé.

Il est alors possible :
Soit de reconfigurer l'unité de contrôle pour contrôler un autre type de pièce à contrôler à ce point de contrôle temporaire, soit de déplacer l'unité de contrôle.

Dans ce deuxième cas, l'unité de contrôle 10 est désactivée, au moins 3 roulettes de déplacement non représentées sont déployées, et l'unité de contrôle 10 est retirée du point de contrôle temporaire.

Alternativement, l'unité peut être déplacée par un charriot élévateur.

L'unité de contrôle 10 peut alors, au choix, être amenée sur un autre point de contrôle temporaire de l'usine, ou bien stockée. L'unité de contrôle 10 présente notamment un volume, un encombrement et une masse lui permettant d'être transportée dans un véhicule automobile utilitaire. Selon un exemple, on prévoit un volume inférieur à 6 mètres cubes (m³). Selon un exemple, les dimensions caractéristiques de l'unité de contrôle sont inférieures à 3 mètres (m), voire inférieures à 2 m. Ces dimensions permettent toutefois de mesurer une grande partie des pièces manufacturées.

L'invention n'est pas limitée aux modes de réalisation présentés et d'autres modes de réalisation apparaîtront clairement à l'homme du métier.

Notamment, une imprimante, une prise et/ou une connexion filaire ou sans fil pour envoyer ou recevoir des données peuvent être ajoutés pour récupérer les données des contrôles effectués, ou bien envoyer des données permettant d'effectuer des contrôles.

D'autres configurations sont envisageables pour l'homme du métier, il pourra notamment proposer trois utilisations différentes de l'unité de contrôle : soit une unité de contrôle pour un opérateur, soit pour deux opérateurs, soit un outil hybride permettant de fonctionner dans l'un des deux modes d'utilisation.

Afin de faciliter et d'accélérer les manipulations avec deux opérateurs, deux ouvertures situées sur deux faces opposées peuvent être configurées. Ainsi, les tâches peuvent être réparties entre les deux opérateurs afin de réduire le temps nécessaire à un cycle de mesure.

Plusieurs tiroirs pourraient également être utilisés en parallèle sur la même unité de contrôle afin de permettre la réalisation de plusieurs cycles en même temps sur la même unité de contrôle, en préparant plusieurs cycles à l'avance afin de réduire le délai entre deux mesures.

En variante, l'unité de contrôle ne comporte pas nécessairement un tiroir. Par exemple, elle dispose d'une ouverture d'accès à l'espace de réception de la pièce à contrôler. L'ouverture d'accès peut être obturée par une porte. La porte elle-même est escamotable pour permettre d'accéder à nouveau à l'espace de réception.

## Revendications

1. Unité de contrôle déplaçable pour assister au moins un opérateur dans le contrôle de pièces manufacturées, comprenant :
- au moins une source d'énergie intégrée et/ou une interface apte à se brancher à une source d'énergie externe ;
- Une interface Homme-Machine permettant d'échanger de l'information entre l'unité de contrôle et un opérateur et de donner des instructions à l'unité de de contrôle ;
- une ouverture d'accès à un espace de réception d'une desdites pièces à contrôler dans une position permettant au moins une mesure de ladite pièce manufacturée, et un obturateur escamotable de l'ouverture d'accès;
- au moins un posage de pièce (60) permettant à un opérateur de positionner correctement la pièce à contrôler,
**caractérisé en ce que** ladite unité de contrôle déplaçable comprend :
- un système de comparaison configurable à travers l'interface Homme-Machine comprenant au moins un moyen de mesure comprenant une mémoire dans laquelle est enregistrée au moins une mesure, comprenant une visualisation du résultat dudit système de comparaison à travers l'interface Homme-machine et comprenant une fonction permettant à l'opérateur de valider ou d'infirmer le résultat dudit système de comparaison.

2. Unité de contrôle selon la revendication 1, dans laquelle la mémoire comprend au moins un modèle numérique 3D d'au moins une pièce étalon.

3. Unité de contrôle selon l'une des revendications 1 ou 2, dans laquelle le modèle numérique 3D enregistré est obtenu à partir de l'analyse d'une pièce étalon préalablement effectuée par ladite unité de contrôle.

4. Unité de contrôle selon l'une des revendications 1 à 3, comprenant au moins trois roulettes aptes à supporter le poids de ladite unité de contrôle (10) et fixées dans une position permettant d'assurer une interface entre le sol et ladite unité de contrôle.

5. Unité de contrôle selon l'une des revendications 1 à 4, dans laquelle l'ouverture d'accès est munie d'un tiroir (50) adapté, en position ouverte, pour recevoir la pièce à contrôler, pour être déplacé en position fermée dans laquelle le tiroir forme ledit obturateur.

6. Unité de contrôle selon l'une des revendications 1 à 5 dans laquelle le système de comparaison analyse la fréquence des différences entre la comparaison initiale et la validation de l'opérateur en fonction d'un seuil de nombre de différence établi et, lorsque ce seuil est atteint, le système de contrôle met à jour la comparaison effectuée en intégrant les valeurs admises par l'opérateur parmi les valeurs correctes et en excluant les valeurs rejetées par l'opérateur.

7. Unité de contrôle selon l'une des revendications 1 à 6 dans laquelle l'espace de réception peut être ouvert par deux ouvertures situées sur deux faces opposées de ladite unité de contrôle.

8. Procédé de réalisation d'un mur de contrôle comprenant les étapes suivantes :
- on positionne une unité de contrôle (10) selon l'une des revendications 1 à 7 sur un emplacement d'une étape à contrôler d'une chaine de production ;
- on active l'unité de contrôle ;
- on sélectionne un modèle de référence préalablement enregistré dans le système de comparaison via l'interface homme-machine et on positionne le posage de pièce (60) adapté audit modèle ;
- on pose sur le posage de pièce une pièce à contrôler ;
- on lance un cycle du système de comparaison ;
- le résultat de la comparaison s'affiche sur un écran de l'unité de contrôle déplaçable;
- optionnellement, on déplace la pièce à contrôler et on relance un cycle du système de mesure autant de fois que nécessaire pour mesurer toute la pièce à contrôler ;
- on récupère la pièce contrôlée et le résultat du système de comparaison entre une mesure de la pièce à contrôler et une mesure correspondante du modèle de référence ;
- on répète le cycle de mesure pour chacune des mesures à vérifier programmées dans le système de comparaison ;
- on répète les étapes ci-dessus à partir de la quatrième étape en changeant de pièce à contrôler tant que le nombre requis de pièces à contrôler ou le délai minimum requis pour la mise en place du mur de contrôle n'est pas atteint ;
- on récupère le posage de pièce, on désactive l'unité de contrôle, et on retire ladite unité de contrôle dudit emplacement de ladite étape à contrôler.

9. Procédé de réalisation d'un mur de contrôle selon la revendication 8 dans lequel l'affichage du résultat sur l'écran se fait sous la forme d'indices de couleur positionnées sur l'image de la pièce à contrôler au niveau des points de contrôle de la pièce à contrôler, la couleur de l'indice indiquant le résultat de la comparaison correspondante.

10. Procédé de réalisation d'un mur de contrôle selon la revendication 8 ou 9 dans lequel, après avoir activé l'unité de contrôle, on mesure une pièce étalon et on mémorise ladite mesure.

11. Utilisation de l'unité de contrôle selon l'une des revendications 1 à 6, dans laquelle un seul opérateur effectue l'ensemble des opérations.

12. Utilisation de l'unité de contrôle selon la revendication 7, dans laquelle deux opérateurs effectuent l'ensemble des opérations en prenant position chacun au niveau d'un des côtés opposés de ladite unité de contrôle doté d'une ouverture.
